# EUROPEAN PATENT SPECIFICATION

(11) **EP 1 561 967 B1**
(45) Date of publication and mention of the grant of the patent: **21.03.2007**
(21) Application number: 04425080.1
(22) Date of filing: 09.02.2004
(51) Int. Cl.: F16H 7/08

(54) **Pawl for a hydraulic chain tensioner**
Sperrklinke für einen hydraulischen Kettenspanner
Cliquet d'arrêt d'un tendeur hydraulique de chaîne

(43) Date of publication of application: 10.08.2005
(73) Proprietor: Morse Tec Europe S.r.l., 20043 Arcore, Milano (IT)
(72) Inventor: Clayton, Philippe Alain, Rickmansworth, Herts WD3 7HL (GB)
(74) Representative: Coggi, Giorgio

(56) References cited:
- EP-A- 1 188 955
- EP-A- 1 319 868
- US-A- 3 753 378

## Description

The present invention relates to a pawl belonging to a device for tensioning drive transmission means, such as chains, and is characterised by the features of claims 1 and 8.

In particular, reference will be made to a pawl suitable to equip a hydraulic chain tensioner, that is, a device for tensioning drive transmission means, in particular chain transmission means for motor vehicles.

A timing system of an internal combustion engine can be controlled by means of a chain transmission, in which the chain is wound on two or more sprocket wheels, one of which is a drive sprocket wheel and takes its drive (even indirectly) from the drive shaft to transmit it to one or more shafts.

Since for reasons of adjustment, of wear on the materials and/or of take-up of slack, it is often necessary to compensate for a certain loose on the chain, use is known of shoe tensioning devices, wherein a shoe is biased with an adjustable force against a branch of the chain.

Various means of biasing the tensioning shoe against the chain are known to the art.

The most frequently used means are the hydraulic tensioners wherein a fixed member (generally a cylinder) is mounted on the engine block and a movable member (generally a piston, movable inside the cylinder) is slidable with respect to the fixed member and acts against the shoe placed in contact with the chain in order to tension it.

In these tensioning devices the piston is pushed out of the cylinder, towards the shoe disposed against one branch of the chain, by the combined action of a spring and a pressurised fluid (generally oil) supplied to the cylinder chamber through a check valve.

Any slackening of the chain due to heating, to wear and to time is compensated for by the projection of the piston from the cylinder under the action of said pushing means.

When pressurised fluid to be supplied to the cylinder chamber (for example because the engine is stopped or has only just been started) is not available, the piston - biased by the tension of the chain - can (or could) retract partially into the cylinder, allowing the chain to slacken and thus not to transmit the drive correctly from the drive wheel to the driven wheels, compromising the efficiency and reliability of the timing system and putting (or being able to put) the engine "out of phase". A known arrangement for overcoming this drawback - described for example in European patent N° 1.188.955 in the name of the applicant - is to couple to the cylinder a pawl which, interacting with a toothed rack coupled to the piston, prevents the piston from retracting into the cylinder when no pressurised fluid is available. This document constitutes the closest prior art.

Both the pawl and the toothed rack have a series of teeth able to engage with those of the toothed rack and the pawl, respectively, to retain the piston in position: in theory the mechanical stresses induced by the toothed rack should be divided more or less evenly over all the teeth of the pawl but it has been found experimentally that in fact - because of the working tolerances of the teeth of the toothed rack and the pawl - the mechanical stresses are concentrated on one of the teeth of the pawl which therefore is (or can be) subject to a much greater stress than that calculated during the design stage, with the consequent risk of breakage and/or of formation of cracks.

Furthermore, at least the teeth of pawls of the prior art have the drawback that the area of intersection of the walls of two adjacent teeth has a very small radius of curvature, tending towards zero, and is - or can be - the site of cracks since the stresses to which the above mentioned teeth are subjected are concentrated in this area.

The (possible) formation of cracks undermines the reliability of the pawl.

Object of the present invention is to provide a pawl able to eliminate the above drawbacks and it is achieved according to the invention by providing a pawl which has the characteristics of appended independent claim 1; preferred embodiments of the invention are apparent from the dependent claims.

Essentially, according to the invention, the pitch between a pre-set tooth of the pawl and the next one is greater than that between two further teeth of the pawl adjacent each other and is greater than the maximum pitch found between two teeth of the toothed rack with which the pawl couples.

In this manner the mechanical stresses induced by the toothed rack are concentrated on the above pre-set tooth of the pawl, which is (or can be) sized - in a per se known manner - so as to be able to withstand said mechanical stresses.

Furthermore, the pawl advantageously has, at the area of intersection of the walls of two adjacent teeth, a space (also known as a "relief") having a large enough radius of curvature to prevent the stresses to which the above teeth are subjected from being concentrated in said area, thus preventing the (possible) formation of cracks.

A hydraulic tensioner comprising a pawl according to the present invention also forms the subject matter of the present invention.

Further characteristics of the invention will be made clearer by the detailed description that follows, referring to purely exemplary and therefore non-limiting embodiments thereof, illustrated in the appended drawings in which:
- Figure 1 is a diagrammatic sectional view of a hydraulic tensioner of the prior art comprising a pawl;
- Figure 2 is a highly enlarged view of a portion of the pawl of the prior art comprising two teeth;
- Figure 3 is an enlarged diagrammatic view of the detail denoted by P in Figure 1, belonging to an embodiment of a pawl made according to the invention.

In the appended figures, corresponding elements are identified by the same reference numerals.

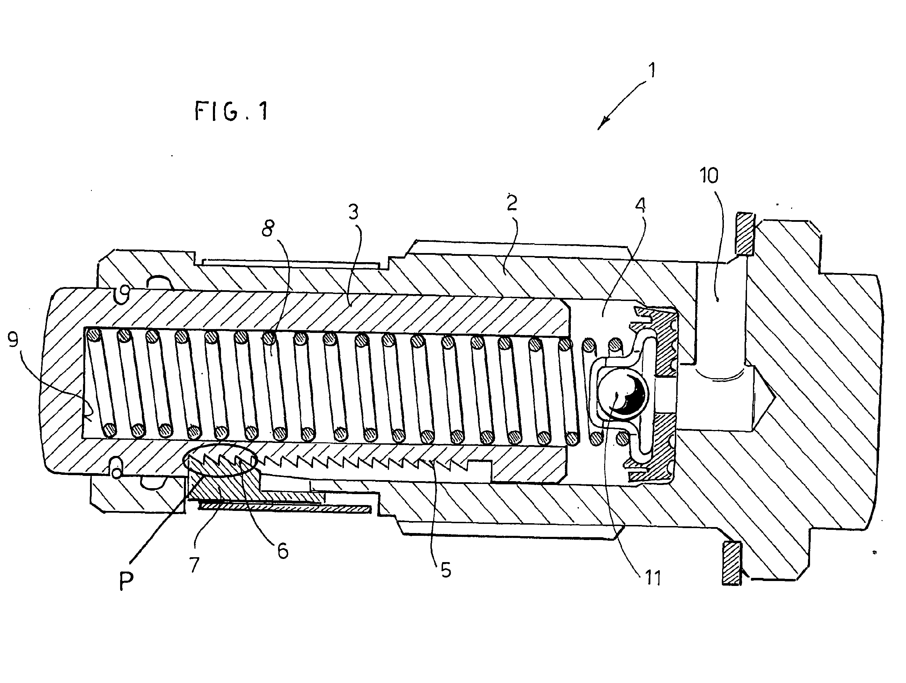

Figure 1 illustrates diagrammatically, in section, a hydraulic tensioner 1 of the prior art, which comprises a cylinder 2 and a piston 3 housed slidingly in a cylindrical chamber 4 of the cylinder 2; the piston 3 carries the toothed rack 5 which interacts with the pawl 7 (comprising a plurality of teeth 6) carried by the cylinder 2.

The piston 3 is hollow on the inside and houses a thrust spring 8 interacting between the end of the head 9 of the piston 3 and the bottom of the cylindrical chamber 4, which is in communication with a circuit for supplying the pressurized fluid (generally oil) through an aperture 10 and a check valve 11, not described in that it is per se known and in any case outside the scope of the present invention.

The combined action of the spring 8 and of the pressurized fluid in the chamber 4 tends to push the piston 3 out of the cylinder 2, so that the piston 3 comes to act with its head end 9 against a shoe (omitted in figure 1 for the sake of simplicity of the graphic representation) in order to keep the chain tensioned.

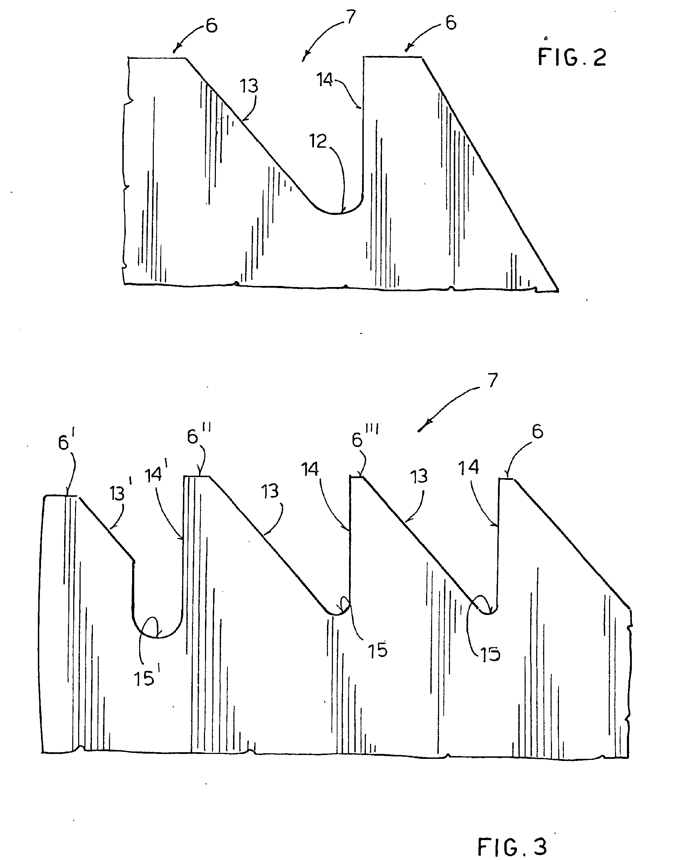

Figure 2 illustrates diagrammatically, much enlarged, a portion of a pawl 7 - of the prior art - comprising two teeth 6, wherein the walls (13, 14) of the two adjacent teeth 6 have an area of intersection 12 "at an acute angle" or in any case with a very small radius of curvature, typically between about 0.05 and about 0.10 mm.

Figure 3 is a diagrammatic, enlarged view of the detail denoted by P in Figure 1, belonging to a pawl 7 made according to the invention, which differs from that - of the prior art - shown in Figure 2 in that the pitch between one pre-set tooth of the pawl 7 and the next (in the embodiment of Figure 3, between the teeth 6'' and 6''') is greater than the nominal pitch, that is to say, it is greater than the pitch of the toothed rack with which it couples and than the pitch between two further teeth 6 of the pawl 7 adjacent to each other.

The pitch between the pre-set tooth of the pawl 7 and the next one (in Figure 3, between the teeth 6'' and 6''') is advantageously about 0.03 mm greater than the pitch between two further teeth 6 of the pawl 7 adjacent each other.

Furthermore, in the area of intersection of the walls (13, 14) of two further adjacent teeth 6, the pawl 7 has a space 15 having a radius of curvature of about 0.3 mm and in any case comprised between about 0.1 e about 0.5 mm.

Lastly, if the pawl 7 is made by means of sintering, it has (or can have) a protruding area (denoted by 6' in the exemplary embodiment illustrated in Figure 3) which does not perform any functional activity, not being intended to engage with the teeth of the toothed rack.

In the area of intersection of the walls (13', 14') belonging to the protruding area 6' and to the next tooth 6'', respectively, the pawl 7 has advantageusly a space 15' having a wide radius of curvature, preferably about 0.3 mm and in any case comprised between about 0.1 mm and about 0.5 mm.

A hydraulic tensioner 1 comprising a pawl according to the present invention, which makes it possible to achieve fully the established objects, also forms the subject matter of the present invention.

Without departing from the scope of the invention, a person skilled in the art can make all the modifications and improvements to the toothed rack of the present invention suggested by his experience and by the natural evolution of the art.

## Claims

1. A pawl (7) for a hydraulic chain tensioner (1) comprising a plurality of teeth (6), **characterised in that** the pitch between one pre-set tooth (6") of the pawl (7) and the next one (6"') is greater than that between two further teeth (6) of the pawl (7) adjacent each other.

2. A pawl (7) according to claim 1, **characterised in that** the pitch between the pre-set tooth (6") of the pawl (7) and the next one (6"') is about 0.03 mm greater than the pitch between two further teeth (6) of the pawl (7) adjacent each other.

3. A pawl (7) according to claim 1, **characterised in that** it has, in the area of intersection of the walls (13, 14) of two further adjacent teeth (6), a space (15) having a radius of curvature comprised between 0.1 and 0.5 mm.

4. A pawl (7) according to claim 3, **characterised in that** the space (15) has, in the area of intersection of the walls (13, 14) of two further adjacent teeth (6), a radius of curvature of about 0.3 mm.

5. A pawl (7) according to claim 1, made by means of sintering and having a protruding area (6'), **characterised in that** it has, at the area of intersection of the walls (13', 14') belonging to the protruding area (6') and to the next tooth (6") of the pawl (7), respectively, a space (15') having a wide radius of curvature.

6. A pawl (7) according to claim 5, **characterised in that** the radius of curvature of said space (15') is comprised between about 0.1 and about 0.5 mm.

7. A pawl (7) according to claim 6, **characterised in that** the radius of curvature of said space (15') is about 0.3 mm.

8. A hydraulic tensioner comprising a pawl (7) according to at least one of the preceding claims.

## Patentansprüche

1. Eine Sperrklinke (7) für eine hydraulische Kettenspannvorrichtung (1), welche eine Vielzahl von Zähnen (6) umfasst, **dadurch gekennzeichnet, dass** die Teilung zwischen dem einen voreingestellten Zahn (6") der Sperrklinke (7) und dem nächsten (6"') größer ist als die zwischen zwei weiteren Zähnen (6) der Sperrklinke (7), die aneinandergrenzen.

2. Eine Sperrklinke (7) gemäß Anspruch 1, **dadurch gekennzeichnet, dass** die Teilung zwischen dem voreingestellten Zahn (6") der Sperrklinke (7) und dem nächsten (6''') um etwa 0,03 mm größer ist als die Teilung zwischen den zwei weiteren Zähnen (6) der Sperrklinke, die aneinandergrenzen.

3. Eine Sperrklinke (7) gemäß Anspruch 1, **dadurch gekennzeichnet, dass** sie im Bereich des Schnittpunkts der Wände (13, 14) von zwei weiteren aneinandergrenzenden Zähnen (6) einen Raum (15) aufweist, der einen Krümmungsradius hat, welcher zwischen 0,1 und 0,5 mm liegt.

4. Eine Sperrklinke gemäß Anspruch 3, **dadurch gekennzeichnet, dass** der Raum (15) im Bereich des Schnittpunkts der Wände (13, 14) von zwei weiteren, jeweils aneinandergrenzenden Zähnen (6) einen Krümmungsradius von etwa 0,3 mm aufweist.

5. Eine Sperrklinke (7) gemäß Anspruch 1, die durch Sintern hergestellt wird und einen vorspringenden Bereich (6') aufweist, **dadurch gekennzeichnet, dass** sie am Bereich des Schnittpunkts der Wände (13', 14'), die jeweils zu dem vorspringenden Bereich (6') und zu dem nächsten Zahn (6") der Sperrklinke (7) gehören, einen Raum (15') aufweist, der einen großen Krümmungsradius hat.

6. Eine Sperrklinke (7) gemäß Anspruch 5, **dadurch gekennzeichnet, dass** der Krümmungsradius des genannten Raums (15') zwischen etwa 0,1 und etwa 0,5 mm liegt.

7. Eine Sperrklinke gemäß Anspruch 6, **dadurch gekennzeichnet, dass** der Krümmungsradius des genannten Raums (15') etwa 0,3 mm beträgt.

8. Eine hydraulische Spannungsvorrichtung, die eine Sperrklinke (7) umfasst, welche mindestens einem der vorausgegangenen Ansprüche entspricht.

## Revendications

1. Cliquet (7) pour tendeur de chaîne hydraulique (1) comprenant une pluralité de dents (6) **caractérisé en ce que** l'espacement entre une dent préfixée (6") du cliquet (7) et la dent suivante (6"') est supérieur à celui entre deux dents ultérieures (6) du cliquet (7) adjacentes l'une par rapport à l'autre.

2. Cliquet (7) selon la revendication 1, **caractérisé en ce que** l'espacement entre la dent préfixée (6") du cliquet (7) et la dent suivante (6"') est environ 0,03 mm supérieur à l'espacement entre deux dents ultérieures (6) du cliquet (7) adjacentes l'une par rapport à l'autre.

3. Cliquet (7) selon la revendication 1, **caractérisé en ce qu'**il présente, dans la zone d'intersection des parois (13, 14) de deux dents adjacentes ultérieures (6), un espace (15) ayant un rayon de courbure compris entre 0,1 et 0,5 mm.

4. Cliquet (7) selon la revendication 3, **caractérisé en ce que** l'espace (15) présente, dans la zone d'intersection des parois (13, 14) de deux dents adjacentes ultérieures (6), un rayon de courbure de 0,3 mm environ.

5. Cliquet (7) selon la revendication 1, réalisé par sintérisation et ayant une zone en saillie (6'), **caractérisé en ce qu'**il présente, dans la zone d'intersection des parois (13', 14') appartenant à la zone en saillie (6') et à la dent suivante (6") du cliquet (7), respectivement, un espace (15') ayant un large rayon de courbure.

6. Cliquet (7) selon la revendication 5, **caractérisé en ce que** le rayon de courbure dudit espace (15') est compris entre 0,1 mm environ et 0,5 mm environ.

7. Cliquet (7) selon la revendication 6, **caractérisé en ce que** le rayon de courbure dudit espace (15') est de 0,3 mm environ.

8. Tendeur hydraulique comprenant un cliquet (7) selon au moins une des revendications susmentionnées.
